# EUROPÄISCHE PATENTSCHRIFT

(11) **EP 3 763 324 B1**
(45) Veröffentlichungstag und Bekanntmachung des Hinweises auf die Patenterteilung: **06.09.2023**
(21) Anmeldenummer: 19185116.1
(22) Anmeldetag: 09.07.2019
(51) Int. Cl.: A61C 9/00, G01J 3/00

(54) **UNTERSTÜTZUNGSSYSTEM ZUR HERSTELLUNG VON DENTALRESTAURATIONEN SOWIE DENTALRESTAURATIONSSYSTEM**
SUPPORT SYSTEM FOR PRODUCING DENTAL RESTORATIONS AND DENTAL RESTORATION SYSTEM
SYSTÈME D'AIDE À LA FABRICATION DE RESTAURATIONS DENTAIRES ET SYSTÈME DE RESTAURATION DENTAIRE

(43) Veröffentlichungstag der Anmeldung: 13.01.2021
(73) Patentinhaber: VITA-ZAHNFABRIK H. Rauter GmbH & Co. KG, 79713 Bad Säckingen (DE)
(72) Erfinder: Rauh, Wolfgang, 79713 Bad Säckingen (DE)
(74) Vertreter: dompatent von Kreisler Selting Werner - Partnerschaft von Patent- und Rechtsanwälten mbB

(56) Entgegenhaltungen:
- DE-U1-202015 002 371
- JP-A- 2012 016 573
- US-A1- 2018 153 664

## Beschreibung

Die Erfindung betrifft ein Unterstützungssystem zur Herstellung von Dentalrestaurationen sowie Dentalrestaurationssystem.

Zur Herstellung von Dentalrestaurationen ist es erforderlich, dass vom Behandler, üblicherweise also vom Zahnarzt Zahndaten des zu restaurierenden Zahns bestimmt werden, dazu gehört auch die Zahnfarbe. Die Zahnfarbe wird typischerweise durch Angabe eines Farbmusters aus einem dentalen Farbsystem (z.B. VITA classical A1-D4^{®} oder VITA System 3D-MASTER^{®}) kommuniziert, ergänzend dazu werden
idealerweise die Farbkoordinaten Helligkeit, Chroma und Farbton übertragen, wodurch eine exaktere Beschreibung der Zahnfarbe ermöglicht wird. Die Bestimmung der Zahnfarbe und der Farbkoordinaten kann mit Hilfe geeigneter Messgeräte erfolgen. Ein hierfür geeignetes Gerät ist das Messgerät VITA Easyshade^{®} der Firma VITA Zahnfabrik. Im nächsten Schritt ist es erforderlich, eine fotografische Aufnahme des entsprechenden Zahnes des Patienten anzufertigen. Die Erstellung eines derartigen Zahnbildes erfolgt heutzutage mittels einer Digitalkamera.

Ferner werden die geometrischen Daten im Patientenmund erfasst, um die erforderlichen räumlichen Daten, beispielsweise zur Herstellung eines Inlays, einer Krone oder einer Prothese, zu ermitteln. Dies kann auf herkömmliche Weise durch einen Zahnabdruck erfolgen, auch kann eine digitale Erfassung der geometrischen Daten durch einen Intraoral-Scanner, erfolgen.

Die geometrischen Daten sowie die Zahndaten werden sodann an ein Zahnlabor übermittelt, in dem die Dentalrestauration, wie ein Inlay, eine Brücke oder eine Zahnprothese oder dergleichen, hergestellt wird. Die Herstellung der Dentalrestauration erfolgt, wenn es sich um eine keramische Dentalrestauration handelt, derart, dass die Dentalrestauration zunächst auf Basis der Geometriedaten entweder zunächst virtuell an einem CAD-System modelliert und danach physisch mit Hilfe einer Bearbeitungsmaschine oder einem 3D-Drucker körperlich hergestellt wird oder manuell unter Verwendung des Abdrucks, typischerweise durch manuelles Auftragen mehrerer Materialschichten hergestellt wird. Die hergestellt Restauration wird sodann in einem Sinterofen gebrannt sofern das verwendete Material dies erfordert. Besonders erwähnenswert ist in diesem Zusammenhang die Tatsache, dass bei der manuellen Herstellung von Restaurationen aus keramischen Materialien häufig mehrere Brände in einem dentalen Ofen durchgeführt werden, beispielsweise jeweils ein Brand nach Auftragen einer Materialschicht. Die Zahndaten werden hierbei insbesondere genutzt, um die entsprechende Materialauswahl, Materialdicke, etc., zu definieren.

Die hergestellte Dentalrestauration wird vom Zahntechniker mit den zuvor ermittelten Zahndaten, den Ziel-Zahndaten, verglichen. Dies erfolgt im Falle der manuellen Herstellung üblicherweise nach jedem Brand. Hierzu nutzt der Zahntechniker Farbmuster aus einem dentalen Farbsystem und vergleicht beispielsweise die Zahnfarbe der Dentalrestauration mit der im dentalen Farbsystem vorhandenen gewünschten Farbe. Da der Prozess der Herstellung einer Dentalrestauration bereits bei kleinen Abweichungen, beispielsweise in der Materialwahl, in der Schichtdicke des aufgetragenen Materials, in der Temperatur und auch im Temperaturverlauf des Sinterofens, nicht exakt zu dem gewünschten Ergebnis führt, werden üblicherweise Korrekturmaßnahmen eingeleitet. Hierbei kann es sich beispielsweise um ein Nachbrennen der Dentalrestauration, ein Versehen der Oberfläche der fertigen Dentalrestauration mit einer Farbe und dergleichen handelt. Vor allem im Fall der manuellen Herstellung besteht eine Möglichkeit zur Korrektur darin, die Farbe des Materials für die nächste aufzutragende Materialschicht anhand der Farbwerte bzw. der Farbabweichung zwischen Zielfarbe der Restauration und aktueller Farbe der vorliegenden Arbeit auszuwählen und dadurch die Farbabweichung der fertigen Restauration zu minimieren. Für den Zahntechniker besteht somit die Problematik, geeignete zusätzliche Behandlungsmaßnahmen für die Dentalrestauration auszuwählen, wenn die Dentalrestauration nicht die geforderten Zahndaten, d.h. die Ziel-Zahndaten, aufweist. US 2018/153664 A1 offenbart ein Unterstützungssystem zur Herstellung von Dentalrestaurationen, wobei ein Vergleich a der gemessenen Zahndaten von den Zähnen eines Patienten mit Referenzzahndaten aus einer Datenbank durchgeführt werden kann.

Aufgabe der Erfindung ist es, ein Unterstützungssystem zur Herstellung von Dentalrestaurationen zu schaffen, das den Zahntechniker bei der Herstellung von Dentalrestaurationen unterstütz.

Die Lösung der Aufgabe erfolgt erfindungsgemäß durch ein Unterstützungssystem zur Herstellung von Dentalrestaurationen mit den Merkmalen des Anspruchs 1.

Das erfindungsgemäße Unterstützungssystem weist ein Messgerät auf, bei dem es sich insbesondere um das Messgerät VITA Easyshade^{®} handelt oder in das das Messgerät VITA Easyshade^{®} oder ein entsprechendes Gerät integriert ist. Mit Hilfe des Messgeräts erfolgt ein Messen der Restaurations-Zahndaten, insbesondere der Zahnfarbe sowie der Zahnkoordinaten, d.h. insbesondere der Helligkeit, des Chromas und des Farbtons einer Zahnrestauration. Mit Hilfe des Messgeräts werden somit die Restaurations-Zahndaten einer Dentalrestauration erfasst. Beispielsweise nach dem Brennen einer Dentalrestauration in einem Sinterofen erfolgt somit mit Hilfe des Messgeräts ein Bestimmen der Restaurations-Zahndaten.

Ferner ist erfindungsgemäß mit dem Messgerät eine Datenverarbeitungseinrichtung verbunden, bzw. verbindbar. Ebenso kann eine unmittelbare Verbindung derart erfolgen, dass die Datenverarbeitungseinrichtung in das Messgerät integriert ist. Durch die Datenverarbeitungseinrichtung erfolgt ein Übertragen der gemessenen Restaurations-Zahndaten. Erfindungsgemäß ist in der Datenverarbeitungseinrichtung ein Analysemodul vorgesehen. Mit Hilfe des Analysemoduls erfolgt ein Vergleich der gemessenen Restaurations-Zahndaten mit zuvor definierten bzw. festgelegten Ziel-Zahndaten. Bei den Ziel-Zahndaten handelt es sich um insbesondere von einem Zahnarzt festgelegte Zahndaten.

Des Weiteren ist in die Datenverarbeitungseinrichtung eine Anzeigeeinrichtung integriert oder mit dieser verbunden. Besonders bevorzugt ist es, dass die Datenverarbeitungseinrichtung und auch die Anzeigeeinrichtung in das Messgerät integriert ist, sodass vom Zahntechniker nur ein einziges Gerät bedient werden muss. Die Anzeigeeinrichtung dient zur Anzeige eines Analyseergebnisses. Bei dem Analyseergebnis handelt es sich insbesondere um die Abweichung zwischen den Restaurations-Zahndaten und den Ziel-Zahndaten. Gegebenenfalls können auf der Anzeigeeinrichtung auch zusätzlich die Ziel-Zahndaten und/oder die Restaurations-Zahndaten dargestellt werden. Für den Zahntechniker erfolgt somit eine exakte Bestimmung und ein exakter Vergleich der Restaurations-Zahndaten und der Ziel-Zahndaten. Hierdurch kann eine sehr präzise Bestimmung der Abweichungen erfolgen.

Der Zahntechniker kann sodann auf Basis der ermittelten Abweichungen geeignete Maßnahmen ergreifen um die Dentalrestauration derart weiter zu behandeln, dass diese möglichst die Ziel-Zahndaten aufweist. Geeignete Maßnahmen sind hierfür beispielsweise ein erneutes Brennen der Dentalrestauration mit einer geeigneten Brennkurven, das Auftragen von Farbe auf die Oberfläche der Dentalrestauration, die Verwendung von Materialien deren Farbe nicht der gewünschten Zielfarbe der Restauration entsprechen um die erkannte Farbabweichungen zu kompensieren.

Bei einer besonders bevorzugten Weiterbildung des erfindungsgemäßen Unterstützungssystems ist in der Datenverarbeitungseinrichtung ein Maßnahmenkatalog hinterlegt. Hierdurch ist es möglich, dass durch die Datenverarbeitungseinrichtung in Abhängigkeit des Vergleichsergebnisses zwischen den Restaurations-Zahndaten und den Ziel-Zahndaten eine Behandlungsmaßnahme zur Verbesserung der Dentalrestauration bzw. zur Verbesserung der Restaurations-Zahndaten definiert bzw. dem Zahntechniker empfohlen werden kann. Diese von der Datenverarbeitungseinrichtung automatisch ermittelte Behandlungsmaßnahme wird in bevorzugter Ausführungsform auf der Anzeigeeinrichtung ausgegeben.

Das Überprüfen der Dentalrestauration kann selbstverständlich nach durchgeführter Behandlungsmaßnahme erneut erfolgen, um ggf. eine weitere Behandlungsmaßnahme durchzuführen, sofern die erneut gemessenen Restaurations-Zahndaten weiterhin von den Ziel-Zahndaten abweichen.

Bei einer weiteren bevorzugten Ausführungsform weist die Datenverarbeitungseinrichtung, die insbesondere in das Messgerät integriert ist, ein Eingabemodul auf. Mit Hilfe des Eingabemoduls können zusätzliche Restaurations-Zahndaten eingegeben werden. Bei diesen zusätzlichen Restaurations-Zahndaten kann es sich, beispielsweise um vom Zahntechniker ermittelte Daten handeln, die beispielsweise mit Hilfe von Farbmustern ermittelt wurden und zur Ergänzung der automatisch erfassten Zahndaten, dienen. Auch könnten vom Zahntechniker weitere Messungen, wie die Härte der Oberfläche, der Dentalrestauration oder dergleichen durchgeführt und die entsprechenden Daten eingegeben werden. Als Eingabemodul kann hierbei eine Tastatur unmittelbar an der Datenverarbeitungseinrichtung, wie insbesondere dem Messgerät vorgesehen oder mit diesem verbindbar sein. Auch kann die Dateneingabe über eine Datenübertragung erfolgen, sodass das Messgerät bzw. die Datenverarbeitungseinrichtung ein Sende- und/oder Empfangsmodul aufweist, sodass entsprechende Daten elektronisch, beispielsweise über Bluetooth oder eine andere Weise der Datenfernübertragung, übermittelt werden können. Auch kann eine entsprechende Datenübertragung über eine USB-Schnittstelle oder dergleichen erfolgen.

Vorzugsweise werden diese zusätzlichen Restaurations-Zahndaten von dem Analysemodul bei dem Vergleich mit den Ziel-Zahndaten und vorzugsweise auch beim Definieren einer Behandlungsmaßnahme berücksichtigt.

Ferner betrifft die Erfindung ein Dental-Restaurationssystem. Das Dental-Restaurationssystem weist eine Restaurationseinrichtung, wie beispielsweise einen Sinterofen, zum Sintern keramischer Zähne auf. Als Restaurationseinrichtung kann auch ein 3D-Drucker sein. Ferner weist das erfindungsgemäße Dental-Restaurationssystem ein Unterstützungssystem, wie vorstehend beschrieben, auf.

Besonders bevorzugt ist es, dass das erfindungsgemäße Dental-Restaurationssystem ferner ein Datenerfassungssystem zum Erfassen von Zahndaten des Patienten aufweist. Ein derartiges Datenerfassungssystem, bei dem es sich beispielsweise zur automatischen Erfassung von Zahndaten um das Messgerät VITA Easyshade^{®} handeln kann, ist mittelbar oder unmittelbar mit der Restaurationseinrichtung zur Übertragung der ermittelten Ziel-Zahndaten, d.h. der Zahndaten des Patienten, verbindbar. Bei einer unmittelbaren Verbindung kann beispielsweise die Restaurationseinrichtung, wie der Sinterofen, ein entsprechendes Brennprogramm auf Basis der Ziel-Zahndaten auswählen. Gegebenenfalls werden vom Zahntechniker zusätzliche Daten eingegeben oder an die Restaurationseinrichtung übermittelt. Hierbei handelt es sich insbesondere, beispielsweise bei einer keramischen Dentalrestauration, um die verwendeten Materialien. Wenn es sich bei der Restaurationseinrichtung um einen 3D-Drucker handelt, wäre es möglich, dass das Datenerfassungssystem auch die geometrischen Daten erfasst, wobei dieses selbstverständlich durch eine zusätzliche Einrichtung erfolgen kann, sodass das Datenerfassungssystem beispielsweise zusätzlich zu einem Messgerät zur Erfassung der Zahndaten ein Gerät zur Erfassung geometrischer Daten, wie einen 3D-Scanner, umfasst.

Das Datenerfassungssystem ist, wie nachstehend ausgeführt, vorteilhaft weitergebildet:
Das Datenerfassungssystem umfasst ein Messgerät zur insbesondere automatischen Messung von Ziel-Zahndaten. Bei den Ziel-Zahndaten handelt es sich insbesondere um die Zahnfarbe sowie die Farbkoordinaten Helligkeit, Chroma und Farbton. Des Weiteren umfasst das Datenerfassungssystem eine Datenverarbeitungs-einrichtung mit einer Kamera zur Aufnahme eines Zahnbildes, Datenverarbeitungseinrichtung handelt es sich in besonders bevorzugter Ausführungsform um eine mobile Datenverarbeitungseinrichtung wie ein Mobiltelefon, insbesondere ein Smartphone oder einen Tablet-Computer. Mit einer derartigen Datenverarbeitungseinrichtung ist es einerseits möglich von den zu restaurierenden Zähnen mit Hilfe der Kamera ein Zahnbild aufzunehmen und andererseits auch Daten zu verarbeiten. Hierzu weist die Datenverarbeitungseinrichtung ein Empfangsmodul und das Messgerät ein Sendemodul zur unmittelbaren Übertragung gemessener Zahndaten von dem Messgerät an die Datenverarbeitungseinrichtung auf.

Vorzugsweise weist die Datenverarbeitungseinrichtung ein integriertes Zuordnungsmodul auf. Hierbei handelt es sich insbesondere um eine entsprechende Software, die beispielsweise als App ausgebildet sein kann. Das Zuordnungsmodul dient zur Zuordnung der empfangenen Zahndaten zu dem von der Datenverarbeitungseinrichtung selbst aufgenommenen Zahnbild. Für die das Datenerfassungssystem bedienende Person, insbesondere den Zahnarzt ist somit eine äußerst einfache und zuverlässige Zuordnung möglich. So kann der Zahnarzt beispielsweise zunächst die Zahndaten erfassen, diese unmittelbar auf das Mobiltelefon oder dergleichen übertragen und insbesondere anschließend ein Zahnbild aufnehmen, so dass eine unmittelbare Zuordnung der Zahndaten zu dem Zahnbild erfolgt. Zuordnungsfehler sind hierdurch ausgeschlossen. Ebenso kann selbstverständlich zunächst das Zahnbild aufgenommen werden und sodann die Zahndaten an das Mobiltelefon oder dergleichen übertragen werden, sodass wiederum eine eindeutige Zuordnung erfolgt. Für den Bediener, insbesondere den Zahnarzt, ist das Handling somit deutlich einfacher. Der Schritt der Übertragung des Zahnbildes an einen Computer entfällt. Auch die Zuordnung des übertragenen Zahnbildes zu den ebenfalls an den Computer übertragenen Zahndaten entfällt. Insbesondere ist ein Computer mit einer entsprechenden Software zur Zuordnung der Daten nicht mehr erforderlich.

Die auf der Datenverarbeitungseinrichtung wie dem Mobiltelefon gespeicherten und einander zugeordneten Zahndaten und Daten des Zahnbildes können auf einfache Weise beispielsweise vom Mobiltelefon über ein in diesem ohnehin vorgesehenes Sendemodul an eine Zahnlabor-Datenverarbeitungseinrichtung und/oder unmittelbar an die Restaurationseinrichtung übertragen werden. Vorteilhaft ist insbesondere, dass dies unmittelbar nach der Zuordnung der Datensätze beispielsweise auf dem Mobiltelefon durch den Zahnarzt erfolgen kann.

Besonders bevorzugt ist es, dass es sich bei der Zahnlabor-Datenverarbeitungseinrichtung ebenfalls um ein Mobiltelefon, einen Tablet-Computer oder dergleichen handelt. Auch auf der Empfängerseite, das heißt beim Techniker im Zahnlabor ist das Handling deutlich vereinfacht. Die entsprechenden Daten erhält der Zahntechniker unmittelbar auf seinem Handy, seinem Tablet oder dergleichen. Ein derartiges Empfangsgerät vereinfacht das Handling. Insofern ist die Akzeptanz derartiger Geräte deutlich größer.

Um eine möglichst einfache Kommunikation zwischen den Geräten zu realisieren ist es besonders bevorzugt, dass die Datenübertragung zwischen dem Messgerät und der Datenverarbeitungseinrichtung wie dem Mobiltelefon oder dergleichen drahtlos erfolgt. Insbesondere kann dies über eine NFC-Schnittstelle, Bluetooth oder WLAN erfolgen.

Insbesondere zum bidirektionalen Datenaustausch und/oder zum Datenabgleich ist es des Weiteren bevorzugt, dass sowohl das Messgerät als auch die Datenverarbeitungseinrichtung wie das Mobiltelefon ein Sende- und Empfangsmodul aufweist, um eine drahtlose Kommunikation zwischen den beiden Geräten zu ermöglichen.

Die Datenübertragung an die Zahnlabor-Datenverarbeitungseinrichtung und/oder die Restaurationseinrichtung erfolgt vorzugsweise durch Datenfernübertragung, insbesondere über das Mobilfunknetz.

Die Datenerfassungseinrichtung kann auch derart ausgebildet sein, dass das Messgerät und die Datenverarbeitungseinrichtung in einem Gerät zusammengefasst sind. Insofern muss der Zahnarzt nur ein einziges Gerät handhaben, mit dem die Erfassung der Patienten-Zahndaten, die Aufnahme eines Zahnbildes sowie auch die Zuordnung und Übertragung der Daten erfolgen kann.

Bei einer weiteren unabhängigen Erfindung weist ein Dentalrestaurationssystem ein Datenerfassungssystem, wie vorstehend beschrieben, jedoch nicht das vorstehend beschriebene Unterstützungssystem auf. Es erfolgt somit durch ein derartiges Dentalrestaurationssystem ausschließlich ein Erfassen der Daten auf Seite der Patienten und ein Übertragen der entsprechenden Daten an das Dentallabor auf ein entsprechendes Gerät des Zahntechnikers. Dies hat den Vorteil, dass der Zahntechniker unmittelbar sämtliche Daten auf seinem Mobilgerät vorliegen hat. Der Zahntechniker kann sodann auf einfache Weise das übertragene Bild mit der tatsächlichen Dentalrestauration vergleichen und somit bekannte Behandlungsmaßnahmen durchführen, sofern die Dentalrestauration nicht mit dem Bild und den übermittelten Daten übereinstimmt.

Nachfolgend wird die Erfindung anhand einer bevorzugten Ausführungsform unter Bezugnahme auf die anliegende Zeichnung näher erläutert.

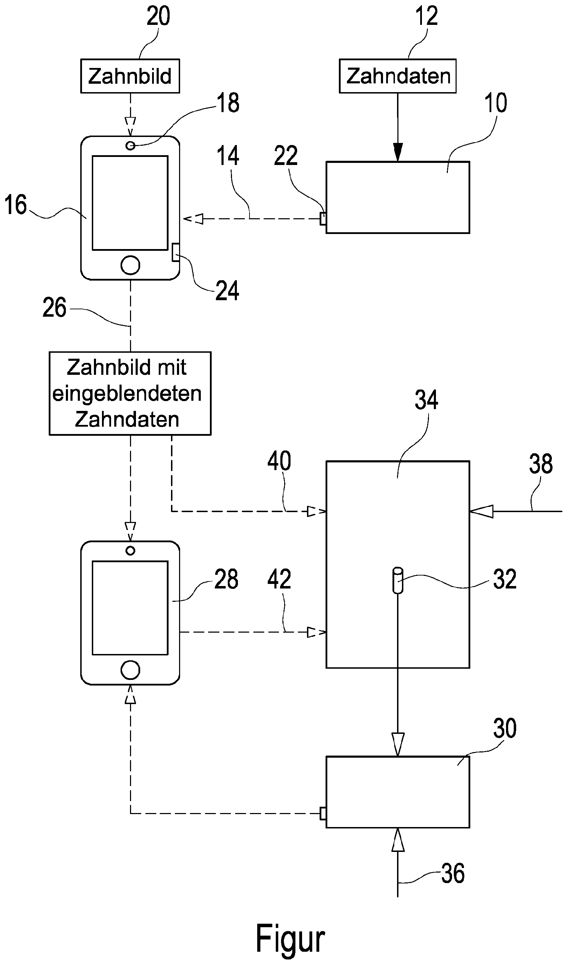

Die Figur zeigt eine schematische Darstellung einer bevorzugten Ausführungsform des erfindungsgemäßen Dentalrestaurationssystem mit Datenerfassungssystem und Unterstützungssystems zur Herstellung von Dentalrestaurationen.

Das erfindungsgemäße Datenerfassungssystem zur Herstellung dentaler Restaurationen weist ein Messgerät 10 auf. Bei dem Messgerät 10 handelt es sich insbesondere um das Messgerät VITA Easyshade^{®}. Mit Hilfe des Messgerätes werden insbesondere vom Zahnarzt Patienten-Zahndaten 12 ermittelt. Die gegebenenfalls in dem Messgerät 10 ver- oder bearbeiteten Patienten-Zahndaten werden insbesondere über eine Bluetooth-Verbindung 14 an eine Datenverarbeitungseinrichtung wie ein Mobiltelefon 16 übermittelt. Die Übermittlung kann auch auf andere Weise auf andere Datenfernübertragungssysteme oder auch kabelgebunden erfolgen. Mit Hilfe des Mobiltelefons wird vor oder nach der Übermittlung der Zahndaten mit Hilfe der in das Mobiltelefon integrierten Kamera 18 ein Zahnbild 20 erzeugt. An Stelle des Verwendens eines Mobiltelefons 16 ist es selbstverständlich möglich, eine Datenverarbeitungseinrichtung in Form eines Computers oder dergleichen vorzusehen und das Zahnbild mit einer gesonderten Kamera und an die Datenverarbeitungseinrichtung wiederrum kabelgebunden oder durch Datenfernübertragung zu übertragen.

Mit Hilfe einer in dem Mobiltelefon 16 vorhandenen Software oder App erfolgt ein Zuordnen der übermittelten Zahndaten 12 zu dem aufgenommenen Zahnbild 20.

Zur Datenübertragung zwischen dem Mobiltelefon 16 und dem Messgerät 10 weist das Messgerät 10 vorzugsweise eine Sende-/Empfangseinrichtung 22 und das Mobiltelefon 16 ebenfalls eine integrierte Sende-/Empfangseinrichtung 24 auf. Hierdurch ist ein Datenaustausch in beiden Richtungen bzw. ein Datenabgleich möglich.

Über das herkömmliche in das Mobiltelefon 16 integrierte Sendemodul erfolgt sodann ein Übertragen des Zahnbildes zusammen mit den zugeordneten Zahndaten beispielsweise über ein Mobilfunknetz 26 an eine Zahnlabor-Datenverarbeitungseinrichtung, bei der es sich insbesondere wieder um ein Mobiltelefon 28 handelt.

Neben dem vorstehend beschriebenen Datenerfassungssystem weist die in der Zeichnung dargestellte bevorzugte Ausführungsform des Datenrestaurationssystems ferner ein Unterstützungssystem auf. Das Unterstützungssystem weist ein Messgerät 30 auf, das vorzugsweise dem Messgerät 10 entspricht. Mit Hilfe des Messgeräts 30, bei dem es sich somit wiederum vorzugsweise um das Messgerät VITA Easyshade^{®} handelt, werden Restaurations-Zahndaten einer Zahnrestauration 32 erfasst. Die Zahnrestauration 32 wurde beispielsweise in einem Sinterofen 34 gesintert. Die von dem Messgerät 30 gemessenen Zahnrestaurations-Zahndaten werden an eine Datenverarbeitungseinrichtung übermittelt, bei der es sich im dargestellten Ausführungsbeispiel wiederum um das Mobiltelefon 28 handelt. Selbstverständlich kann es sich auch um eine andere Datenverarbeitungseinrichtung handeln. Die Datenübertragung erfolgt wiederum kabelgebunden, über Bluetooth oder eine andere Datenfernübertragung. In der Datenverarbeitungseinrichtung 28 ist ein Analysemodul vorgesehen. Mit Hilfe des Analysemoduls, das als App in dem Mobiltelefon 28 vorgesehen sein kann, erfolgt ein Vergleich der von dem Messgerät 10 bestimmten Patienten-Zahndaten. Das Vergleichsergebnis kann auf dem Bildschirm des Mobiltelefons 28 als Abweichung, ggf. zusammen mit den Restaurations-Zahndaten und/oder den Patienten-Zahndaten, dargestellt werden. Vorzugsweise weist die Datenverarbeitungseinrichtung 28 ferner einen Maßnahmenkatalog auf. Hierdurch ist es möglich, dass das Analysemodul in Abhängigkeit des Vergleichsergebnisses aus dem hinterlegten Maßnahmenkatalog Maßnahmen zur weiteren Behandlung der Zahnrestauration 32 vorschlägt und diese ebenfalls auf dem Bildschirm des Mobiltelefons 28 darstellt.

Zusätzlich zu den mit Hilfe des Messgeräts 30 gemessenen Restaurations-Zahndaten kann ein Zahntechniker beispielsweise mit Hilfe eines dentalen Farbsystems ebenfalls Zahndaten erfassen und diese zur Korrektur eingeben. Die Eingabe der Daten kann entweder, wie durch den Pfeil 36 dargestellt am Messgerät 30 erfolgen oder kann auch unmittelbar an der Datenverarbeitungseinrichtung 28 vorgenommen werden.

Zur Herstellung der Zahnrestauration 32 werden beispielsweise im Sinterofen 34 wie durch einen Pfeil 38 dargestellt Daten übermittelt, die ein Brennprogramm definieren oder durch die der Sinterofen 34 ein Brennprogramm auswählt. Gegebenenfalls kann es sich hierbei auch oder zusätzlich um Zahndaten 12 handeln, die entsprechend des Pfeils 40 an die Restaurationseinrichtung 34 übermittelt werden. Auch die von der Datenverarbeitungseinrichtung 28 definierten Daten für eine zusätzliche Behandlungsmaßnahme können unmittelbar entsprechend des Pfeils 42 an die Restaurationseinrichtung 34 übermittelt werden.

## Patentansprüche

1. Unterstützungssystem zur Herstellung von Dentalrestaurationen, mit
einem Restaurations-Zahndaten, insbesondere die Zahnfarbe sowie Farbkoordinaten einer Zahnrestauration (32) bestimmenden Messgerät (30),
einer mit dem Messgerät (30) zur Übertragung der gemessenen Restaurations-Zahndaten verbundenen bzw. verbindbaren Datenverarbeitungseinrichtung (28),
einem in der Datenverarbeitungseinrichtung (28) vorgesehenem Analysemodul zum Vergleich der gemessenen Restaurations-Zahndaten mit bestimmten Ziel-Zahndaten (12) und
einer mit der Datenverarbeitungseinrichtung (28) verbundenen Anzeigeeinrichtung zur Anzeige eines Analyseergebnisses.

2. Unterstützungssystem nach Anspruch 1, **dadurch gekennzeichnet, dass** der Datenverarbeitungseinrichtung (28) ein Maßnahmenkatalog hinterlegt ist, sodass die Datenverarbeitungseinrichtung (28) in Abhängigkeit des Vergleich-Ergebnisses eine Behandlungsmaßnahme zur Verbesserung der Zahnrestauration definiert.

3. Unterstützungssystem nach Anspruch 2, **dadurch gekennzeichnet, dass** die definierte Behandlungsmaßnahme auf der Anzeigeeinrichtung ausgegeben wird.

4. Unterstützungssystem nach einem der Ansprüche 1 bis 3, **dadurch gekennzeichnet, dass** die Datenverarbeitungseinrichtung (28) ein Eingabemodul zur Eingabe zusätzlicher Restaurations-Zahndaten aufweist.

5. Unterstützungssystem nach Anspruch 4, **dadurch gekennzeichnet, dass** das Analysemodul die eingegebenen zusätzlichen Restaurations-Zahndaten bei dem Vergleich und insbesondere bei der Definition einer Behandlungs-Maßnahme berücksichtig.

6. Unterstützungssystem nach einem der Ansprüche 1 bis 5, **dadurch gekennzeichnet, dass** die Datenverarbeitungseinrichtung (28) und/oder die Anzeigeeinrichtung in das Messgerät (30) integriert ist.

7. Dentalrestaurationssystem zur Herstellung von Dentalrestaurationen, mit
einer Restaurationseinrichtung (34) insbesondere einem Sinterofen zum Sintern keramischer Zähne (32) und
einem Unterstützungssystem nach einem der Ansprüche 1 bis 6.

8. Dentalrestaurationssystem nach Anspruch 7, **gekennzeichnet durch** ein Datenerfassungssystem zum Erfassen von Patienten-Zahndaten, das mit der Restaurationseinrichtung (34) zur Datenübertragung verbindbar ist.

9. Dentalrestaurationssystem nach Anspruch 8, **dadurch gekennzeichnet, dass** das Datenerfassungssystem aufweist:
ein die Patienten-Zahndaten (12) insbesondere die Zahnfarbe sowie Farbkoordinationen bestimmenden Messgerät (10),
eine Datenverarbeitungseinrichtung (16) mit einer Kamera (18) zur Aufnahme eines Zahnbildes (20),
wobei die Datenverarbeitungseinrichtung (16) ein Empfangsmodul (24) und das Messgerät (10) ein Sendemodul (22) zur unmittelbaren Übertragung gemessener Patienten-Zahndaten (12) vom Messgerät (10) an die Datenverarbeitungseinrichtung (16) aufweist,
einem in die Datenverarbeitungseinrichtung (16) integriertes Zuordnungsmodul zur Zuordnung der empfangenen Zahndaten (12) zu dem Zahnbild (20) und
einem in die Datenverarbeitungseinrichtung (16) integrierten Sendemodul zur Übertragung des Zahnbildes (20) einschließlich zugeordneter Zahndaten (12) an die Restaurationseinrichtung.

10. Dentalrestaurationssystem nach Anspruch 9, **dadurch gekennzeichnet, dass** mittels des Messgeräts (10) eine automatische Datenerfassung zumindest eines Teils der Patienten-Zahndaten (12) erfolgt.

11. Dentalrestaurationssystem nach Anspruch 9 oder 10, **dadurch gekennzeichnet, dass** die Kamera (18) in die Datenverarbeitungseinrichtung (16) integriert ist.

12. Dentalrestaurationssystem nach einem der Ansprüche 9 bis 11, **dadurch gekennzeichnet, dass** die Datenverarbeitungseinrichtung (16) als mobile Datenverarbeitungseinrichtung ausgebildet ist, insbesondere ein Mobiltelefon oder ein Tablet-Computer ist.

13. Dentalrestaurationssystem nach einem der Ansprüche 9 bis 12, **dadurch gekennzeichnet, dass** die Datenübertragung zwischen dem Messgerät (10) und der Datenverarbeitungseinrichtung (16) drahtlos, insbesondere mittels NFC-Kommunikation, Bluetooth oder WLAN erfolgt.

14. Dentalrestaurationssystem nach einem der Ansprüche 9 bis 13, **dadurch gekennzeichnet, dass** zum Datenaustausch von der Datenverarbeitungseinrichtung (16) an das Messgerät und/oder zum Datenabgleich das Messgerät (10) die Datenverarbeitungseinrichtung (16) ein Sende- und Empfangsmodul aufweist.

15. Dentalrestaurationssystem nach einem der Ansprüche 9 bis 13, **dadurch gekennzeichnet, dass** ein Sendemodul der Datenverarbeitungs-einrichtung (16) zur Datenübertragung an die Restaurationseinrichtung (34), ggf. über die Zahnlabor-Datenverarbeitungseinrichtung (28) zur Datenfernübertragung, insbesondere über Mobilfunknetze ausgebildet ist.

16. Dentalrestaurationssystem nach einem der Ansprüche 7 bis 15 **dadurch gekennzeichnet, dass** der Restaurationseinrichtung (34) eine Zahnlabor-Datenverarbeitungseinrichtung (28) vorgeschaltet ist, die vorzugsweise eine Anzeigeeinrichtung aufweist.

## Claims

1. Support system for the manufacture of dental restorations, comprising
a measuring device (30) determining restoration tooth data, in particular the tooth color as well as color coordinates of a tooth restoration (32),
a data processing device (28) connected or connectable with the measuring device (30) for transmitting the measured restoration tooth data,
an analysis module for comparing the measured restoration tooth data with specified target tooth data (12), said module being provided in the data processing device (28), and
a display device for displaying an analysis result, said device being connected with the data processing device (28).

2. Support system of claim 1, **characterized in that** the data processing device (28) includes a catalogue of measures stored therein so that the data processing device (28) defines a treatment measure for improving the dental restoration in dependence on the comparison result.

3. Support system of claim 2, **characterized in that** the defined treatment measure is outputted on the display device.

4. Support system of one of claims 1 to 3, **characterized in that** the data processing device (28) comprises an input module for inputting additional restoration tooth data.

5. Support system of claim 4, **characterized in that** the analysis module takes the inputted additional restoration tooth data into account in the comparison and in particular when defining a treatment measure.

6. Support system of one of claims 1 to 5, **characterized in that** the data processing device (28) and/or the display device are integrated in the measuring device (30).

7. Dental restoration system for the manufacture of dental restorations, comprising
a restoration device (34), in particular a sintering furnace for sintering ceramic teeth (32), and
a support system as defined in one of claims 1 to 6.

8. Dental restoration system of claim 7, **characterized by** a data acquisition system for acquiring patient tooth data, said system being connectable with the restoration device (34) for the transmission of data.

9. Dental restoration system of claim 8, **characterized in that** the data acquisition system comprises:
a measuring device (10) determining patient tooth data (12), in particular the tooth color as well as color coordinates,
a data processing device (16) with a camera (18) for capturing a tooth image (20),
wherein the data processing device (16) comprises a receiving module (24) and the measuring device (10) comprises a transmission module (22) for the immediate transmission of measured patient tooth data (12) from the measuring device (10) to the data processing device (16),
an allocation module for the allocation of the received tooth data (12) to the tooth image (20), said module being integrated in the data processing device (76), and
a transmission module for the transmission of the tooth image (20) including the allocated tooth data (12) to the restoration data, said module being integrated in the data processing device (16).

10. Dental restoration system of claim 9, **characterized in that** automatic data acquisition of at least a part of the patient tooth data (12) is performed using the measuring device (10).

11. Dental restoration system of claim 9 or 10, **characterized in that** the camera (18) is integrated in the data processing device (16).

12. Dental restoration system of one of claims 9 to 11, **characterized in that** the data processing device (16) is configured as a mobile data processing device, in particular a mobile phone or a tablet computer.

13. Dental restoration system of one of claims 9 to 12, **characterized in that** the data transmission between the measuring device (10) and the data processing device (16) is performed in a wireless manner, in particular via NFC communication, Bluetooth or WLAN.

14. Dental restoration system of one of claims 9 to 13, **characterized in that** for an exchange of data from the measuring device (10) to the data processing device (16) and/or the synchronization of data, the with the data processing device (16) and the measuring device (10) comprise a transceiver module.

15. Dental restoration system of one of claims 9 to 13, **characterized in that** a transmission module of the data processing device (16) is configured for data transmission to the restoration device (34), possibly via a data processing device (28) of a dental laboratory, for remote data transmission in particular via mobile networks.

16. Dental restoration of one of claims 7 to 15, **characterized in that** a data processing device (28) of a dental laboratory is arranged upstream of the restoration device (34), said a data processing device preferably comprising a display device.

## Revendications

1. Système d'aide pour la fabrication de restaurations dentaires, comprenant un instrument de mesure (30) déterminant des données dentaires de restauration, notamment la couleur d'une dent ainsi que des coordonnées de couleur d'une restauration dentaire (32),
un dispositif de traitement de données (28) relié ou pouvant être relié à l'instrument de mesure (30) pour la transmission des données dentaires de restauration,
un module d'analyse prévu dans le dispositif de traitement de données (28) et destiné à la comparaison des données dentaires de restauration à des données dentaires cibles (12) et
un dispositif d'affichage pour l'affichage d'un résultat d'analyse, relié au dispositif de traitement de données (28).

2. Système d'aide selon la revendication 1, **caractérisé en ce qu'**un catalogue d'actions est enregistré au dispositif de traitement de données (28) de manière à ce que le dispositif de traitement de données (28) définisse une action de traitement pour améliorer la restauration de la dent en fonction des résultats de comparaison.

3. Système d'aide selon la revendication 2, **caractérisé en ce que** l'action de traitement définie est éditée sur le dispositif d'affichage.

4. Système d'aide selon l'une des revendications 1 à 3, **caractérisé en ce que** le dispositif de traitement de données (28) comprend un module d'entrée pour entrer des données dentaires de restauration supplémentaires.

5. Système d'aide selon la revendication 4, **caractérisé en ce que** le module d'analyse prend en compte les données dentaires de restauration supplémentaires entrées, lors de la comparaison et notamment lors de la définition d'une action de traitement.

6. Système d'aide selon l'une des revendications 1 à 5, **caractérisé en ce que** dispositif de traitement de données et/ou le dispositif d'affichage est intégré à l'instrument de mesure (30).

7. Système de restauration dentaire pour la fabrication de restaurations dentaires, comprenant
un dispositif de restauration (34), notamment un four de frittage pour fritter des dents céramiques (32) et
un système d'aide selon l'une des revendications 1 à 6.

8. Système de restauration dentaire selon la revendication 7, **caractérisé par** un système de saisie de données destiné à saisir des données dentaires de patients et pouvant être relié au dispositif de restauration dentaire (34) pour la transmission de données.

9. Système de restauration dentaire selon la revendication 8, **caractérisé en ce que** le système de saisie de données comprend :
un appareil de mesure (10) déterminant les données dentaires de patient (12), en particulier la couleur des dents, ainsi que des coordonnées de couleur,
un dispositif de traitement de données (16) avec une caméra (18) pour la prise d'une image de dent (20),
le dispositif de traitement de données (16) comprenant un module de réception (24) et l'appareil de mesure (10) comprenant un module d'émission (22) pour la transmission immédiate de données dentaires de patient (12) mesurées de l'appareil de mesure (10) au dispositif de traitement de données (16),
un module d'attribution pour l'attribution des données dentaires (12) reçues à l'image de dent (20) et
un module émetteur intégré dans le dispositif de traitement de données (16) pour la transmission de l'image de dent (20) au dispositif de restauration.

10. Système de restauration dentaire selon la revendication 9, **caractérisé en ce qu'**une saisie automatique de données d'au moins d'une partie des données dentaires de patient (12) se fait au moyen de l'appareil de mesure (10).

11. Système de restauration dentaire selon la revendication 9 ou 10, **caractérisé en ce que** la caméra (18) est intégrée au dispositif de traitement de données (16).

12. Système de restauration dentaire selon l'une des revendications 9 à 11, **caractérisé en ce que** le dispositif de traitement de données (16) est conçu comme un dispositif de traitement de données mobile, notamment un téléphone mobile ou un ordinateur portable.

13. Système de restauration dentaire selon l'une des revendications 9 à 12, **caractérisé en ce que** la transmission de données entre l'appareil de mesure (10) et le dispositif de traitement de données (16) s'effectue sans fil, notamment au moyen de communication NFC, Bluetooth ou WLAN.

14. Système de restauration dentaire selon l'une des revendications 9 à 13, **caractérisé en ce que**, pour un échange de données du dispositif de traitement de données (16) vers l'appareil de mesure et/ou pour une comparaison de données, l'appareil de mesure (10) et le dispositif de traitement de données (16) comprennent un module d'émission et de réception.

15. Système de restauration dentaire selon l'une des revendications 9 à 13, **caractérisé en ce qu'**un module émetteur du dispositif de traitement de données (16) est configuré pour la transmission de données au dispositif de restauration (34), le cas échéant par le dispositif de traitement de données (28) de laboratoire dentaire, notamment par des réseaux mobiles radio.

16. Système de restauration dentaire selon l'une des revendications 7 à 15, **caractérisé en ce qu'**un dispositif de traitement de données (28) de laboratoire dentaire, comprenant de préférence un dispositif d'affichage, est placé en amont du dispositif de restauration (34).
